(19) Europäisches Patentamt
European Patent Office
Office européen des brevets

(11) **EP 4 597 600 A1**

(12) **EUROPEAN PATENT APPLICATION**
published in accordance with Art. 153(4) EPC

(43) Date of publication:
06.08.2025 Bulletin 2025/32

(21) Application number: 23872397.7

(22) Date of filing: 27.09.2023

(51) International Patent Classification (IPC):
$H01M\ 4/12^{(2006.01)}$    $H01M\ 4/06^{(2006.01)}$
$H01M\ 4/134^{(2010.01)}$    $H01M\ 4/1395^{(2010.01)}$
$H01M\ 4/40^{(2006.01)}$    $H01M\ 4/62^{(2006.01)}$

(52) Cooperative Patent Classification (CPC):
H01M 4/06; H01M 4/12; H01M 4/134;
H01M 4/1395; H01M 4/40; H01M 4/62; Y02E 60/10

(86) International application number:
PCT/JP2023/035087

(87) International publication number:
WO 2024/071175 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 JP 2022156228

(71) Applicant: Maxell, Ltd.
Kyoto 618-8525 (JP)

(72) Inventor: KAWABE, Keisuke
Otokuni-gun, Kyoto 618-8525 (JP)

(74) Representative: Mewburn Ellis LLP
Aurora Building
Counterslip
Bristol BS1 6BX (GB)

(54) **MULTILAYER SHEET FOR ALLOY FORMATION, METHOD FOR PRODUCING NEGATIVE ELECTRODE FOR NONAQUEOUS ELECTROLYTE BATTERIES, AND METHOD FOR PRODUCING NONAQUEOUS ELECTROLYTE BATTERY**

(57) Provided are a laminated sheet for alloy formation used to fabricate a negative electrode that allows constructing a nonaqueous electrolyte battery with good load characteristics at low temperature, and a method of manufacturing a negative electrode and a method of manufacturing a nonaqueous electrolyte battery for fabricating a negative electrode and a nonaqueous electrolyte battery with improved productivity. A method of manufacturing a negative electrode for a nonaqueous electrolyte battery according to the present invention is a method of manufacturing a negative electrode including an anode active material layer having a lithium layer and a lithium-aluminum alloy layer formed on a surface of the lithium layer, and a carbon layer formed on a surface of the anode active material layer, comprising: laminating a laminated sheet for alloy formation, which is an independent sheet including an aluminum foil and a carbon layer formed on one side of the aluminum foil, onto the lithium layer in such a manner that the side of the aluminum foil in the laminated sheet for alloy formation opposite to the side with the carbon layer is in contact with the lithium layer; and allowing lithium in the lithium layer and aluminum in the aluminum foil to react with each other to form the anode active material layer.

**Description**

TECHNICAL FIELD

The present invention relates to a laminated sheet for alloy formation used to produce a negative electrode that allows constructing a nonaqueous electrolyte battery with good load characteristics at low temperature, and a method of manufacturing a negative electrode for a nonaqueous electrolyte battery that uses such a laminated sheet for alloy formation to fabricate a negative electrode for a nonaqueous electrolyte battery. The present invention also relates to a method of manufacturing a nonaqueous electrolyte battery that fabricates a negative electrode by said method of manufacturing a negative electrode.

BACKGROUND ART

Nonaqueous electrolyte batteries such as lithium primary batteries and lithium secondary batteries with a negative electrode containing a lithium-aluminum alloy are widely used in various applications, and there are many attempts to improve their characteristics.

For example, Patent Document 1 proposes a technique in conjunction with a nonaqueous electrolyte battery (i.e., nonaqueous electrolytic solution battery) using a negative electrode that includes a lithium layer with a lithium-aluminum alloy layer formed on its surface and further includes a carbon layer on top of the lithium-aluminum alloy layer to enhance high-temperature storage characteristics and load characteristics at low temperature.

Patent Document 2 describes a current collector for an electrochemical element, the current collector including an aluminum foil with a carbon material-containing conductive film formed on one or both sides of the foil.

PRIOR ART DOCUMENTS

PATENT DOCUMENTS

Patent Document 1: WO 2020/250816 A1
Patent Document 2: WO 2012/108212 A1

SUMMARY OF THE INVENTION

PROBLEMS TO BE SOLVED BY THE INVENTION

If such a method as described in Patent Document 1 is used in which, during fabrication of a negative electrode, an aluminum layer (i.e., aluminum foil) is laminated onto the surface of the lithium layer and a composition with carbon particles dispersed in an organic solvent is further applied to the surface of the aluminum layer to form a carbon layer, the step of applying that composition to an aluminum foil with a limited surface area is necessary before assembly of a battery. Thus, if the surface area of the electrodes is small, as is the case with a coin battery, there are likely to be variations in the amount of the composition applied. Further, even in the case of electrodes with a relatively large surface area, such as in a cylindrical battery, the composition must be applied to cut pieces of aluminum foil, one by one, and then dried, which means that the step of producing the negative electrode takes time and that other improvements are to be made in terms of the productivity of the negative electrode and the battery.

The present invention was made in view of the above-stated circumstances; an object of the present invention is to provide a laminated sheet for alloy formation used to fabricate a negative electrode that allows constructing a nonaqueous electrolyte battery with good load characteristics at low temperature, and to provide a method of manufacturing a negative electrode for a nonaqueous electrolyte battery and a method of manufacturing a nonaqueous electrolyte battery that use such a laminated sheet for alloy formation to fabricate a negative electrode for a nonaqueous electrolyte battery and a nonaqueous electrolyte battery, respectively, with improved productivity.

MEANS FOR SOLVING THE PROBLEMS

A laminated sheet for alloy formation according to the present invention is an independent sheet including an aluminum foil (including a foil of aluminum that contains only Al (and unavoidable impurities) and a foil of an aluminum alloy that contains an alloy of Al and other elements; the same applies hereinafter to "aluminum foil" herein unless specifically stated otherwise) and a carbon layer formed on one side of the aluminum foil, the laminated sheet for alloy formation used to form a lithium-aluminum alloy layer on a surface of a lithium layer by allowing a side of the aluminum foil opposite to the side with the carbon layer to contact the lithium layer.

A method of manufacturing a negative electrode for a nonaqueous electrolyte battery (hereinafter sometimes simply referred to as "negative electrode" or "anode") according to the present invention is a method of manufacturing a negative electrode including an anode active material layer having a lithium layer and a lithium-aluminum alloy layer formed on a surface of the lithium layer, and a carbon layer formed on a surface of the anode active material, including: laminating the laminated sheet for alloy formation according to the present invention onto the lithium layer in such a manner that the side of the aluminum foil in the laminated sheet for alloy formation opposite to the side with the carbon layer is in contact with the lithium layer; and allowing lithium in the lithium layer and aluminum in the aluminum foil to react with each other to form the anode active material layer.

A method of manufacturing a nonaqueous electrolyte battery according to the present invention is a method of manufacturing a nonaqueous electrolyte battery including a positive electrode, a negative electrode and a separation layer between the positive electrode and the negative electrode, the negative electrode including an anode active material layer having a lithium layer and a lithium-aluminum alloy layer formed on a surface of the lithium layer, and a carbon layer formed on a surface of the anode active material layer, wherein the negative electrode is formed by the method of manufacturing a negative electrode for a nonaqueous electrolyte battery according to the present invention.

EFFECTS OF THE INVENTION

The present invention provides a laminated sheet for alloy formation used to fabricate a negative electrode that allows constructing a nonaqueous electrolyte battery with good load characteristics at low temperature. Further, such a laminated sheet for alloy formation according to the present invention may be used to assemble a negative electrode and also a battery to enable manufacturing a negative electrode that allows constructing a nonaqueous electrolyte battery with improved load characteristics at low temperature and a nonaqueous electrolyte battery including such a negative electrode with improved productivity.

BRIEF DESCRIPTION OF THE DRAWINGS

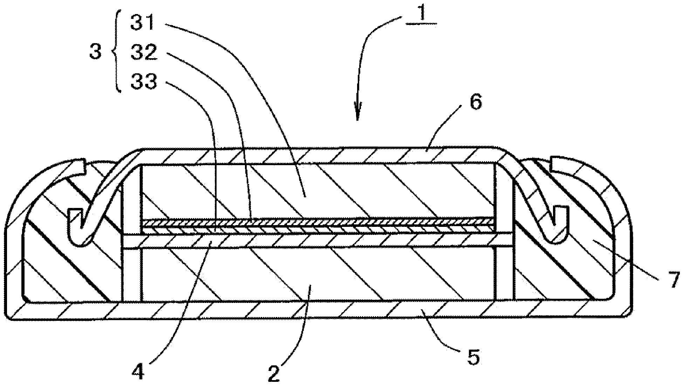

[FIG. 1] FIG. 1 is a schematic cross-sectional view of an exemplary nonaqueous electrolytic solution battery according to the present invention.

EMBODIMENTS FOR CARRYING OUT THE INVENTION

A nonaqueous electrolyte battery produced by the manufacturing method according to the present invention includes a negative electrode including an anode active material layer having a lithium layer and a lithium-aluminum alloy layer formed on a surface of the lithium layer, and a carbon layer formed on a surface of the anode active material layer. As a battery includes such a negative electrode, the reactivity of the negative electrode will be improved and, at the same time, a better current-collecting performance will be provided, thereby enabling enhancement of the load characteristics of the nonaqueous electrolyte battery at low temperature (e.g., load characteristics at low temperatures of about -30 to -40 °C).

A lithium-aluminum alloy layer included in a negative electrode may be formed by, for example, providing a lithium layer constituted by a lithium foil or a lithium-alloy foil, laying an aluminum layer constituted by an aluminum foil on a side of the lithium layer to produce a laminated body, forming a carbon layer on a surface of the aluminum layer of this laminated body (i.e., side of the aluminum layer opposite to the side with the lithium layer) to produce a laminated body for a negative electrode, and allowing this laminated body to contact a nonaqueous electrolytic solution to cause the lithium layer and aluminum layer to react with each other.

If a method of constructing a laminated body for a negative electrode were employed where an aluminum foil is cut into pieces to conform with the size of the lithium layer and a carbon layer is formed on the surface of each piece of aluminum foil by applying a composition with carbon particles dispersed in an organic solvent to an individual piece of aluminum foil cut to conform with a negative electrode to be formed, the limited surface area of the aluminum foil makes it difficult to uniformly apply the composition in a short period of time: for example, in the case of an electrode with small surface area, as is the case with a coin battery, there are likely to be variations in the amount of the composition applied, and other problems may also occur, such as the composition spilling over the aluminum foil during application. On the other hand, even in the case of an electrode with a relatively large surface area, such as in a cylindrical battery, the composition must be applied to cut pieces of aluminum foil, one by one, and then dried, causing problems such as time required to produce the negative electrode, which represents a factor in impairing the productivity of the negative electrode and the nonaqueous electrolyte battery.

In view of this, in the method of manufacturing a negative electrode for a nonaqueous electrolyte battery according to the present invention and the method of manufacturing a nonaqueous electrolyte battery according to the present invention, an aluminum foil with a carbon layer formed in advance on its surface is used and this aluminum foil and a lithium layer are laminated to form a lithium-aluminum alloy layer of a negative electrode. Thus, for example, a carbon layer may be formed on a surface of an aluminum foil with a large surface area and this aluminum foil is then cut into the required size to be supplied for manufacture of a negative electrode, which enables producing, easily and in a short period of time, an aluminum foil with a uniform carbon layer, thereby reducing the decrease in the productivity of the negative electrode and nonaqueous electrolyte battery caused by formation of a carbon layer.

Further, an aluminum foil is thin and has low strength; thus, an aluminum foil alone is sometimes difficult to cut and/or otherwise treat; forming a carbon layer on the surface in advance is expected to mitigate problems with cutting or otherwise treating an aluminum foil, for example.

For the reasons stated above, a nonaqueous electrolyte battery using a negative electrode produced by the method of manufacturing a negative electrode for a nonaqueous electrolyte battery according to the present invention and a nonaqueous electrolyte battery produced by the method of manufacturing a nonaqueous electrolyte battery according to the present invention make it easier to produce the effects of the formed carbon layer effectively and provides improved load characteristics at low temperature.

<Method of Manufacturing Negative Electrode for Nonaqueous Electrolyte Battery>

In the method of manufacturing a negative electrode according to the present invention, a negative electrode including a negative electrode active material layer and a carbon layer laminated on its surface can be produced through the following steps:

the step of laminating a lithium layer and an independent sheet (i.e., laminated sheet for alloy formation) including an aluminum foil and a carbon layer formed on one side of the aluminum foil to form a laminated body for a negative electrode, in such a manner that the side of the aluminum foil in the laminated sheet for alloy formation opposite to the side with the carbon layer is in contact with the lithium layer; and
the step of allowing lithium in the lithium layer relating to the laminated body for a negative electrode and aluminum in the aluminum foil to react with each other to form an anode active material layer including the lithium layer and a lithium-aluminum alloy layer formed on its surface.

The lithium foil or lithium-alloy foil constituting the lithium layer may be, for example, a foil made from Li (and unavoidable impurities) (i.e., lithium foil), or a foil made from an Li alloy containing, as the alloy content(s), one or more of Fe, Ni, Co, Mn, Cr, V, Ti, Zr, Nb, and Mo, for example, in a total amount not larger than 40 mass %, preferably not larger than 10 mass %, and more preferably not larger than 5 mass %, the balance being Li and unavoidable impurities (i.e., lithium-alloy foil).

The thickness of the lithium foil or lithium-alloy foil constituting the lithium layer is preferably 0.1 to 1.5 mm.

The aluminum foil constituting part of the laminated sheet for alloy formation and used to form the lithium-aluminum alloy layer relating to the negative electrode may be, for example, a foil made from Al (and unavoidable impurities) or a foil made from an Al alloy containing, as the alloy content(s), one or more of Fe, Ni, Co, Mn, Cr, V, Ti, Zr, Nb, and Mo, for example, the balance being Al and unavoidable impurities (the total content of the alloy contents being, for example, not higher than 50 mass %, preferably not higher than 10 mass %, and more preferably not higher than 5 mass %) (i.e., aluminum-alloy foil).

To ensure that the formed lithium-aluminum alloy layer better produce its effects, the thickness of the aluminum foil used to form the lithium-aluminum alloy layer is preferably not smaller than 1 $\mu$m, more preferably not smaller than 3 $\mu$m, and particularly preferably not smaller than 5 $\mu$m.

On the other hand, too high a ratio of the lithium-aluminum alloy layer to the lithium layer would lead to a decrease in the capacity of the negative electrode. Further, an aluminum foil, when forming an alloy with lithium, expands in volume, causing cracks in the aluminum foil (i.e., lithium-aluminum alloy layer); if the aluminum foil were thick, the negative electrode might have such cracks reaching deep inside such that, upon receiving large vibrations, portions of the lithium-aluminum alloy layer might drop off. In view of this, to ensure that the thickness of the lithium-aluminum alloy layer formed is not larger than a certain level, the thickness of the aluminum foil is preferably not larger than 20 $\mu$m, and more preferably not larger than 15 $\mu$m.

As discussed above, the carbon layer is formed on a surface (i.e., one side) of the aluminum foil, which is together used as a laminated sheet for alloy formation. The carbon layer may be composed only of carbon (i.e., particles thereof); alternatively, it may contain a binder together with carbon such that the carbon layer can be easily held on the surface of the negative electrode. Further, in implementations where the nonaqueous electrolyte battery is an all-solid-state battery including a solid electrolyte layer, the carbon layer preferably contains a solid electrolyte, discussed further below, to provide ionic conductivity.

Carbon constituting the carbon layer may be in the form of, for example, carbon black such as furnace black, channel black, acetylene black, or thermal black; graphite such as natural graphite (e.g., flake graphite) or artificial graphite; filamentous carbon such as vapor-grown carbon fiber or carbon nanotubes, where only one of them may be used, or two or more may be used in combination.

Examples of binders that can be used in the carbon layer include polyvinylidene fluoride (PVDF), polytetrafluoroethylene (PTFE), styrenebutadiene rubber (SBR), carboxymethyl cellulose (CMC), polyvinyl alcohol (PVA), polyethylene oxide (PEO), acrylic resin, polyacrylic acid, and polyvinyl pyrrolidone. In particular, compounds with a pentacyclic lactam structure, such as polyvinyl pyrrolidone, are preferably used because they enable good dispersion of fine-particle carbon materials, such as carbon black, in a solvent when dissolved therein.

The content of the binder in the carbon layer is preferably not higher than 2 mass %, more preferably not higher than 1 mass %, and yet more preferably not higher than 0.5 mass %.

To ensure that the formed carbon layer well produces the good effects discussed above, the mass per unit area (i.e., weight per unit area) of the carbon layer in the negative electrode is preferably not smaller than 0.15 mg/cm$^2$, more preferably not smaller than 0.3 mg/cm$^2$, and particularly preferably not smaller than 0.5 mg/cm$^2$. However, increasing the thickness of the carbon layer may result in saturation in terms of effect, and also increase the total thickness of the negative electrode and thus necessitate a decrease in the amount of cathode active material that can be introduced into the battery, for example, potentially leading to a decrease in the capacity of the battery. In view of this, to provide high battery capacity, for example, the weight per unit area of the carbon layer in the negative electrode is preferably not larger than 3 mg/cm$^2$, more preferably not larger than 1.5 mg/cm$^2$, and particularly preferably not larger than 1.0 mg/cm$^2$.

Thus, the laminated sheet for alloy formation used in manufacture of a negative electrode is preferably one including a carbon layer in a weight per unit area within a range as listed above formed on a surface of the aluminum foil such that its weight per unit area in the negative electrode after manufacture satisfies a value as listed above.

The carbon layer may be formed by, for example, dispersing carbon and a binder that may be added as necessary, for example, in an organic solvent (the binder may also be dissolved) to prepare a composition for forming a carbon layer (i.e., liquid composition such as paste or slurry), applying this composition to the surface of the aluminum foil, and drying.

The organic solvent used in the composition for forming a carbon layer is preferably a solvent typically used in a nonaqueous electrolytic solution that can be used in a battery, for example. Specific examples include cyclic carbonates such as ethylene carbonate, propylene carbonate (PC), butylene carbonate, and vinylene carbonate; chain carbonates such as dimethyl carbonate, diethyl carbonate, and methyl ethyl carbonate; ethers such as 1,2-dimethoxyethane (DME), diglyme (diethylene glycol dimethyl ether), triglyme (triethylene glycol dimethyl ether), tetraglyme (tetraethylene glycol dimethyl ether), methoxyethoxyethane, 1,2-diethoxyethane, and tetrahydrofuran; cyclic esters such as γ-butyrolactone; and nitriles, where one or more of them may be used; however, carbonic acid esters such as propylene carbonate may react with lithium to form lithium carbonate and reduce the reactivity of the surface of the negative electrode; in view of this, to make it easier to produce the effects of the present invention, it is preferable to use solvents other than carbonic acid esters, and it is more preferable to use ether, and it is yet more preferable to use DME.

The organic solvent used in the composition for forming the carbon layer may be a solvent used in forming a coating such as a slurry containing a cathode active material; in implementations where a fine-particle carbon material such as carbon black is used, compounds with a pentacyclic lactam structure, such as 2-pyrrolidone and N-methyl-2-pyrrolidone (NMP), are preferably used because they enable good dispersion of such carbon materials. Such a compound having a pentacyclic lactam structure may also be mixed with such an organic solvent as listed above.

The laminated sheet for alloy formation may be a commercial carbon-coated aluminum foil (e.g., "SHX" (product name) from Shohoku Laminate Co., Ltd.).

The laminated body for a negative electrode including a lithium layer and the aluminum foil with the carbon layer on its surface may be formed by, for example, laminating a lithium foil or lithium-alloy foil constituting the lithium layer and the laminated sheet for alloy formation in such a manner that the foil is in contact with the side of the aluminum foil in the laminated sheet for alloy formation opposite to the side with the carbon layer, and pressure bonding.

The negative electrode may be a laminate of a lithium-aluminum alloy layer and a carbon layer, located successively, on one or both sides of the lithium layer, depending on the embodiment of the battery. For example, a battery in which positive electrodes are disposed on both sides of the lithium layer of the negative electrode with separation layers (i.e., separators or solid electrolyte layers) present in between may have a negative electrode with anode active material layers having lithium-aluminum alloy layers on both sides of the lithium layer, where carbon layers are further located on both sides of the anode active material layers. Thus, in the case of producing a negative material with a laminate of a lithium-aluminum alloy layers and carbon layers successively located on both sides of a lithium layer, a laminated body for a negative electrode is used in which laminated sheets for alloy formation are laminated onto both sides of the lithium foil or lithium-alloy foil constituting the lithium layer. Alternatively, a laminated sheet for alloy formation may be laminated onto one side of the lithium foil or lithium-alloy foil constituting the lithium layer to fabricate a laminated body for a negative electrode, which is then bent in such a manner that the negative electrode is positioned on both sides of the positive electrode to form a battery similar to the one discussed above.

The negative electrode may be composed only of an anode active material layer constituted by a lithium layer and a lithium- aluminum alloy layer formed on its surface, and a carbon layer, or the negative electrode may further include a current collector as necessary.

The anode current collector may be made of a material that does not react with lithium, such as copper, nickel, iron or stainless steel, and may be in the form of, for example, plain-woven metal wire, expand metal, steel netting, perforated metal, metal foam, or foil (i.e., sheet). The thickness of the current collector is preferably 5 to 100 $\mu$m, for example. It is desirable that a pasty conductive material such as carbon paste or silver paste be applied to the surface of such a current collector.

The anode current collector may be brought into contact with one side of the lithium layer (i.e., lithium foil) to be integrated therewith in advance; alternatively, the lithium foil may be laminated onto the anode current collector and the laminated sheet for alloy formation may further be laminated thereto. Alternatively, the laminated sheet for alloy formation may be laminated onto the lithium foil and then the anode current collector may be positioned on the side of the lithium foil opposite to that with the laminated sheet for alloy formation.

The step of allowing lithium in the lithium layer in the laminated body for a negative electrode and aluminum in the aluminum foil to react with each other to form a lithium-aluminum alloy layer on the surface of the lithium layer to produce an anode active material layer may be performed before assembly of a battery. In such implementations, a negative electrode obtained by changing the aluminum layer of the laminated body for a negative electrode to a lithium-aluminum alloy layer is used for assembly of a nonaqueous electrolyte battery. For example, in implementations where a nonaqueous electrolyte battery is produced in which a solid electrolyte layer is present between the positive and negative electrodes, a negative electrode with a lithium-aluminum alloy layer formed in advance is used.

In implementations where the formation of a lithium-aluminum alloy layer in a laminated body for a negative electrode is performed before assembly of a battery, a process may be employed where, for example, the laminated body for a negative electrode is immersed in a nonaqueous electrolytic solution that can be used in a nonaqueous electrolyte battery discussed further below or its solvent, or a process where the surface of the laminated body for a negative electrode is wetted by such a nonaqueous electrolyte solution or its solvent.

On the other hand, a battery may be assembled using the laminated body for a negative electrode in lieu of a negative electrode, where the laminated body for a negative electrode is brought into contact with a nonaqueous electrolytic solution during assembly (i.e., during injection of nonaqueous electrolytic solution) and a lithium-aluminum alloy layer is formed in the same manner as discussed above to provide a negative electrode. In implementations where a nonaqueous electrolyte battery using a nonaqueous electrolytic solution is manufactured, the step of manufacturing a negative electrode prior to assembly of a battery is simplified by the latter method, which is preferable since the productivity of the nonaqueous electrolyte battery is further enhanced.

In the negative electrode, the lithium-aluminum alloy layer may be present over an entire surface of the lithium layer, or may be present only on some portions of the surface of the lithium layer. However, the higher the proportion of the surface area provided with the lithium-aluminum alloy layer, the easier it is to ensure that the formed lithium-aluminum alloy layer produces its effects; in view of this, the proportion of the surface area of the lithium layer provided with the lithium-aluminum alloy layer is preferably not lower than 40 %, more preferably not lower than 70 %, particularly preferably not lower than 90 %, and most preferably 100 %, i.e., the lithium-aluminum alloy layer is present over the entire surface of the lithium layer.

In the negative electrode thus produced, the carbon layer remains on a surface of the anode active material layer and, essentially, laminated on the surface of the lithium-aluminum alloy layer formed. The carbon layer may be present over the entire surface of the lithium-aluminum alloy layer, or may be present on some portions of the surface of the lithium-aluminum alloy layer. In other words, the laminated sheet for alloy formation may be one in which some portions of the surface of the aluminum foil are not covered with the carbon layer, where some portions of the lithium-aluminum alloy layer formed may be exposed at the surface of the negative electrode, without being covered with the carbon layer. For example, during formation of the lithium-aluminum alloy layer, its surface may acquire recesses and protrusions, and the protrusions may be exposed at the surface of the negative electrode. Alternatively, the carbon layer may be in the form of islands that are sporadically present.

Nevertheless, the higher the proportion of the portions of the surface of the lithium layer provided with the lithium-aluminum alloy layer and carbon layer, the easier it is to ensure that the present invention produces its effects; in view of this, the proportion of the surface area of the lithium-aluminum alloy layer provided with the carbon layer is preferably not lower than 40 %, more preferably not lower than 70 %, particularly preferably not lower than 90 %, and more particularly preferably 100 %, i.e., the carbon layer is present over the entire surface of the lithium-aluminum alloy layer. Thus, it is desirable that the carbon layer be present on the surface of the aluminum foil of the laminated sheet for alloy formation in such a manner that the proportion of its surface area satisfies such a value as listed above.

Further, it is most preferable that, in the negative electrode thus produced, the lithium-aluminum alloy layer is present over the entire surface of the lithium layer and the carbon layer is present over the entire surface of the lithium-aluminum alloy layer.

<Method of Manufacturing Nonaqueous Electrolyte Battery>

In the method of manufacturing a nonaqueous electrolyte battery according to the present invention, to produce a nonaqueous electrolyte battery including a positive electrode, a negative electrode and a separator or solid electrolyte layer between the positive and negative electrodes, the negative electrode is formed by the method of manufacturing a negative electrode for a nonaqueous electrolyte battery according to the present invention. Specifically, the method involves: the step of laminating a laminated sheet for alloy formation, including an aluminum foil and a carbon layer on one side of the aluminum foil, onto a lithium layer such that the side of the aluminum foil opposite to that with the carbon layer is in contact with the lithium layer to form a laminated body for a negative electrode; the step of allowing lithium in the lithium layer relating to the laminated body for a negative electrode and aluminum in the aluminum foil to react with each other to form a lithium-aluminum alloy layer on the surface of the lithium layer to produce an anode active material layer; and the subsequent step of fabricating the negative electrode including the anode active material layer and the carbon layer formed on a surface of the anode active material layer.

Nonaqueous electrolyte batteries manufactured by the manufacturing method according to the present invention include primary batteries and secondary batteries, and include batteries having a solid electrolyte layer present between the positive and negative electrodes (i.e., all-solid-state batteries) and battery including a separator present between the positive and negative electrodes and an electrolyte containing a solvent (i.e., nonaqueous electrolytic solution or aqueous electrolytic solution, or a gelatinous electrolyte obtained by gelating such an electrolytic solution) (i.e., batteries other than all-solid-state batteries).

The positive electrode relating to the nonaqueous electrolytic solution battery may be, for example, a molding of a mixture containing a cathode active material, a conductive aid, a binder and other ingredients (i.e., cathode mixture) formed into a pellet, for example, or a positive electrode constructed such that a layer made of such a cathode mixture (i.e., cathode mixture layer) is present on one or both sides of the current collector.

Examples of cathode active materials include manganese dioxide; lithium-containing composite oxides such as lithium-containing manganese oxides (e.g., $LiMn_3O_6$ or composite oxides having the same crystal structures as manganese dioxide (e.g., $\beta$-type, $\gamma$-type, or structures with $\beta$- and $\gamma$-types mixed together) with an Li content not higher than 3.5 mass %, preferably not higher than 2 mass %, more preferably not higher than 1.5 mass %, and particularly preferably not higher than 1 mass %); $Li_aTi_{5/3}O_4$ ($4/3 \leq a < 7/3$); vanadium oxides; niobium oxides; titanium oxides; sulfides such as iron disulfide; and graphite fluorides.

Examples of conductive aids relating to the cathode mixture include flake graphite, acetylene black, Ketjenblack, and carbon black, where only one of them may be used, or two or more may be used in combination.

Examples of binders relating to the cathode mixture include fluorine resins such as PVDF, PTFE, and polymers of propylene hexafluoide, where only one of them may be used, or two or more may be used in combination.

In the case of an all-solid-state battery constituted by a nonaqueous electrolyte battery having a solid electrolyte layer, the cathode mixture preferably contains a solid electrolyte.

The solid electrolyte contained in the cathode mixture is not limited to any particular one as long as it has lithium-ionic conductivity, and may be, for example, a sulfide-based solid electrolyte, a hydride-based solid electrolyte, a halide-based solid electrolyte, or an oxide-based solid electrolyte.

The sulfide-based solid electrolyte may be particles of $Li_2S$-$P_2S_5$-, $Li_2S$-$SiS_2$-, $Li_2S$-$P_2S_5$-$GeS_2$-, or $Li_2S$-$B_2S_3$-based glass; alternatively, it may be a thio-LISICON-based one, which has been attracting attention in recent years as having high Li-ion-conductivity ($Li_{12-12a-b+c+6d-e}M^1_{3+a-b-c-d}M^2_bM^3_cM^4_dM^5_{12-e}X_e$ such as $Li_{10}GeP_2S_{12}$, $Li_{9.54}Si_{1.74}P_{1.44}S_{11.7}Cl_{0.3}$ (where $M^1$ is Si, Ge or Sn; $M^2$ is P or V; $M^3$ is Al, Ga, Y or Sb; $M^4$ is Zn, Ca or Ba; $M^5$ is either S or S and O; X is F, Cl, Br or I; $0 \leq a < 3$; $0 \leq b+c+d \leq 3$; and $0 \leq e \leq 3$), or one with an argyrodite-type crystal structure.

The hydride-based solid electrolyte may be, for example, $LiBH_4$ or a solid solution of $LiBH_4$ and one or more of the alkali metal compounds listed below (e.g., $LiBH_4$ and an alkali metal compound in a molar ratio of 1:1 to 20:1). The alkali metal compound in the solid solution may be at least one selected from the group consisting of: lithium halide (e.g., LiI, LiBr, LiF, or LiCl), rubidium halide (e.g., RbI, RbBr, RbF, or RbCl), cesium halide (e.g., CsI, CsBr, CsF, or CsCl), lithium amide, rubidium amide and cesium amide.

The halide-based solid electrolyte may be, for example, monoclinic $LiAlCl_4$, $LiInBr_4$ in a defective spinel- or layered structure, or monoclinic $Li_{6-3m}Y_mX_6$ (where $0 < m < 2$ and X=Cl or Br), or may be a known one such as described in WO 2020/070958 A1 or WO 2020/070955 A1, for example.

The oxide-based solid electrolyte may be, for example, garnet-type $Li_7La_3Zr_2O_{12}$, NASICON-type $Li_{1+o}Al_{1+o}Ti_{2-o}(PO_4)_3$ or $Li_{1+p}Al_{1+p}Ge_{2-p}(PO_4)_3$, or perovskite-type $Li_{3q}La_{2/3-q}TiO_3$.

Among these solid electrolytes, a sulfide-based solid electrolyte is preferable as it has high lithium-ionic conductivity, more preferably a sulfide-based solid electrolyte containing Li and P, and yet more preferably a sulfide-based solid electrolyte having an argyrodite-type crystal structure as it has higher lithium-ionic conductivity and high chemical stability.

A particularly preferable sulfide-based solid electrolyte having an argyrodite-type crystal structure may be, for

example, $Li_cPS_5Cl$ or one represented by one of the following general compositional formulae, (1) or (2).

$$Li_{7-x+y}PS_{6-x}Cl_{x+y} \qquad (1)$$

In general compositional formula (1), $0.05 \leq y \leq 0.9$ and

$$-3.0x + 1.8 \leq y \leq -3.0x + 5.7.$$

$$Li_{7-a}PS_{6-a}Cl_bBr_c \qquad (2)$$

In general compositional formula (2), $a = b+c$, $0 < a \leq 1.8$, $0.1 \leq b/c \leq 10.0$.

To reduce grain-boundary resistance, the average particle size of the solid electrolyte is preferably not smaller than 0.1 $\mu$m, and more preferably not smaller than 0.2 $\mu$m; on the other hand, to provide for sufficient formation of contact interfaces between the active material and solid electrolyte, the size is preferably not larger than 10 $\mu$m, and more preferably not larger than 5 $\mu$m.

In implementations where the positive electrode is a molding of a cathode mixture, the positive electrode may be produced by, for example, mixing a cathode active material and a conductive aid and, in addition, a binder and a solid electrolyte, for example, to prepare a cathode mixture and pressure-forming it into a predetermined shape.

Further, in implementations with a positive electrode having a cathode mixture layer and a current collector, the positive electrode may be produced by, for example, dispersing a cathode active material and a conductive aid and, in addition, a binder and a solid electrolyte, for example, in a solvent to prepare a cathode mixture-containing composition (e.g., slurry or paste) (the binder may be dissolved in the solvent), applying it to the current collector and drying, and performing press processing, such as calendering, as necessary.

The solvent for the cathode mixture-containing composition may be water or an organic solvent such as N-methyl-2-pyrrolidone (NMP), for example. In implementations where the cathode mixture-containing composition also contains a solid electrolyte, it is preferable to select a solvent that is not likely to degrade the solid electrolyte. In particular, sulfide-based solid electrolytes and hydride-based solid electrolytes, for example, are subject to chemical reaction in the presence of minute amounts of water; in view of this, it is preferable to use a non-polar, non-protic solvent such as a hydrocarbon solvent, such as hexane, heptane, octane, nonane, decane, decalin, toluene, or xylene. In particular, it is more preferable to use a superdehydrated solvent with a water content not higher than 0.001 mass % (10 ppm). A fluorine-based solvent may also be used, e.g., "Vertrel" (registered trademark) from DuPont Mitsui Fluorochemicals Co., "Zeorora" (registered trademark) from Zeon Corporation, or "Novec" (registered trademark) from Sumitomo 3M Ltd., as well as a nonaqueous organic solvent such as dichloromethane or diethyl ether.

It will be understood that the positive electrode is not limited to ones produced by the above-discussed methods, and may be produced by other methods.

To specify the composition of the cathode mixture relating to the positive electrode, the amount of the cathode active material is preferably 80 to 90 mass %, the content of the conductive aid is preferably 1.5 to 10 mass %, and the content of the binder is preferably 0.3 to 10 mass %. If sufficiently good formability can be provided without a binder in the cathode mixture, such as in implementations where the cathode mixture contains a sulfide-based solid electrolyte, the cathode mixture may contain no binder (i.e., the content of binder in the cathode mixture is 0 mass %).

Further, if the cathode mixture contains a solid electrolyte, the content of the solid electrolyte in the cathode mixture is preferably not lower than 10 parts by mass, where the content of the cathode active material is represented by 100 parts by mass, and more preferably not lower than 15 parts by mass, and preferably not higher than 65 parts by mass, and more preferably not higher than 60 parts by mass.

In implementations with a molding of a cathode mixture, its thickness is preferably 0.15 to 4 mm. On the other hand, in implementations with a positive electrode having a cathode mixture layer and a current collector, such as implementations with a positive electrode with a coating layer of a cathode mixture formed on the current collector, the thickness of the cathode mixture layer (i.e., thickness of the mixture layer one side of the current collector) is preferably 30 to 300 $\mu$m.

In implementations where the positive electrode uses a current collector, the current collector may be made of, for example, a stainless steel such as SUS316, SUS430 or SUS444, and may be in the form of, for example, plain-woven metal wire, expand metal, steel netting, perforated metal, metal foam, or foil (i.e., sheet). The thickness of the current collector is preferably 0.05 to 0.2 mm, for example. It is desirable that a pasty conductive material, such as carbon paste or silver paste, be applied to the surface of such a current collector.

In implementations where the nonaqueous electrolyte battery is an all-solid-state battery, the separation layer present between the positive and negative electrodes is a solid electrolyte layer, where the solid electrolyte in this solid electrolyte layer may be one or more of the various sulfide-based solid electrolytes, hydride-based solid electrolytes, halide-based solid electrolytes, and oxide-based solid electrolytes listed above as examples that can be used for the positive electrode. To provide even better battery characteristics, it is desirable that a sulfide-based solid electrolyte be contained therein, and it is more desirable that an argyrodite-type sulfide-based solid electrolyte be contained. It is yet more desirable that a sulfide-based solid electrolyte be contained in both the positive electrode and the solid electrolyte layer, and it is particularly desirable that an argyrodite-type sulfide-based solid electrolyte be contained in both of them.

The solid electrolyte layer may include a support body constituted by a porous body such as a nonwoven fabric made of resin.

The solid electrolyte layer may be formed by, for example, a process that involves compressing a solid electrolyte by pressure forming, for example; or a process in which a solid electrolyte is dispersed in a solvent to prepare a composition for forming the solid electrolyte layer, the composition is applied to a substrate (including a porous body to constitute a support body), a positive electrode and a negative electrode, which are then dried and subjected to pressure forming, such as press processing, as necessary.

It is desirable that the solvent used for the composition for forming the solid electrolyte layer be one that is not likely to degrade the solid electrolyte, and preferably selected from the same various solvents listed above as examples of solvents for the cathode mixture-containing composition.

The thickness of the solid electrolyte layer is preferably 10 to 500 $\mu$m.

In implementations where the nonaqueous electrolyte battery is a battery that is not an all-solid-state battery, the separator that serves as the separation layer present between the positive and negative electrodes may be nonwoven fabric or microporous membrane (i.e., microporous film), and may be made of a polyolefin such as polyethylene (PE), polypropylene (PP) or ethylene-propylene copolymer; or, if heat resistance is required due to the application of the battery, the separator may also be made of, for example, a fluorine resin such as tetrafluoroethylene-perfluoroalkoxyethylene copolymer (PFA), polyphenylene sulfide (PPS), polyether ether ketone (PEEK), polybutylene terephthalate (PBT), polymethylpentene, polyamide, polyimide, aramid, or cellulose. The nonwoven fabric or microporous membrane may be made of only one of these examples, or may be made of two or more of them. The nonwoven fabric or microporous membrane that serves as the separator can be made of a monolayer structure formed from such a material as listed above, or of a laminate structure composed of a plurality of nonwoven-fabric or microporous-film layers formed from different materials, for example.

To minimize decrease in the energy density of the battery, the thickness of the separator may be, for example, not larger than 500 $\mu$m, preferably not larger than 450 $\mu$m, and more preferably not larger than 300 $\mu$m. However, if the separator is too thin, the function of preventing a short circuit may be insufficient; in view of this, if nonwoven fabric is to be used, its thickness may be, for example, not smaller than 30 $\mu$m, preferably not smaller than 100 $\mu$m, and more preferably not smaller than 150 $\mu$m. Furthermore, if microporous membrane is to be used, the thickness is preferably not smaller than 5 $\mu$m, more preferably not smaller than 10 $\mu$m, and particularly preferably not smaller than 15 $\mu$m.

If the nonaqueous electrolyte battery is a battery that is not an all-solid-state battery, a nonaqueous electrolyte containing an electrolyte salt is used, where the nonaqueous electrolyte is typically a nonaqueous liquid electrolyte (hereinafter referred to as "electrolytic solution"). The electrolytic solution is made by dissolving an electrolyte salt, such as lithium salt, in an organic solvent. The organic solvent is not limited to any particular one, and examples include chain esters such as dimethyl carbonate, diethyl carbonate, ethyl methyl carbonate, and methyl propyl carbonate; cyclic esters with high dielectric constant such as ethylene carbonate, propylene carbonate, butylene carbonate, and vinylene carbonate; solvent mixtures of chain esters and cyclic esters, where solvent mixtures with a chain ester as the main solvent and a cyclic ester are particularly suitable.

The electrolyte salt to be dissolved in the organic solvent to prepare the electrolytic solution may be one, or a mixture of two or more, of $LiPF_6$, $LiBF_4$, $LiAsF_6$, $LiSbF_6$, $LiCF_3SO_3$, $LiC_4F_9SO_3$, $LiCF_3CO_2$, $Li_2C_2F_4(SO_3)_2$, $LiC_nF_{2n+1}SO_3$ ($n \geq 2$), $LiN(RfSO_2)(Rf'SO_2)$, $LiC(RfSO_2)_3$, $LiN(RfOSO_2)_2$ (where Rf and Rf" are fluoroalkyl groups), for example. The concentration of the electrolyte salt in the electrolytic solution is not limited to any particular value, and is preferably not lower than 0.3 mol/l, more preferably not lower than 0.4 mol/l, and preferably not higher than 1.7 mol/l, and more preferably not higher than 1.5 mol/l.

In a nonaqueous electrolyte battery, the nonaqueous electrolyte may be, other than the electrolytic solutions discussed above, a gelatinous electrolyte obtained by gelating such an electrolytic solution using a gelatinizer made of a polymer, for example.

FIG. 1 shows a schematic longitudinal cross-sectional view of an exemplary nonaqueous electrolyte battery produced by the manufacturing method according to the present invention. The nonaqueous electrolyte battery 1 shown in FIG. 1 includes a battery container composed of an exterior can 5, a seal can 6, and a gasket 7 made of resin present in between, where a positive electrode 2, a negative electrode 3, and a separation layer 4 present between the positive and negative electrodes 2 and 3 (i.e., separator or solid electrolyte layer) are sealed in the battery container. In implementations where a separator 4 is provided between the positive and negative electrodes 2 and 3, a nonaqueous electrolyte containing an electrolyte salt is also sealed in the battery container.

The seal can 6 is fitted into the opening of the exterior can 5 with the gasket 7 present in between, where the opening edge of the exterior can 5 is tightened inwardly such that the gasket 7 comes into abutment with the seal can 6 to seal up the opening of the exterior can 5 such that the interior of the battery is hermetically sealed off.

The negative electrode 3 includes an anode active material layer composed of a lithium layer 31 and a lithium-aluminum alloy layer 32, and a carbon layer 33.

In implementations where the nonaqueous electrolyte battery is produced using a negative electrode having a lithium-aluminum alloy layer, a negative electrode produced by the method of manufacturing a negative electrode according to the present invention is used, and the positive and negative electrodes are laminated onto each other with a separator or solid electrolyte layer present in between, or are laminated and then further rolled up, for example, to form an electrode assembly (e.g., laminated electrode assembly or rolled electrode assembly), and this electrode assembly and a nonaqueous electrolyte containing an electrolyte salt such as an electrolytic solution (if a separator is used) are sealed in the battery container to produce a nonaqueous electrolyte battery.

In other implementations where, during manufacture of the nonaqueous electrolyte battery, the formation of the lithium-aluminum alloy layer is performed after assembly of the battery, a laminated body for a negative electrode with a lithium layer and a laminated sheet for alloy formation is used to assemble a battery, within which a negative electrode having a lithium-aluminum alloy layer is formed. More specifically, for example, a positive electrode and a laminated body for a negative electrode are laminated with a separator present in between, or are laminated and further rolled up, for example, to form an electrode assembly (e.g., a laminated electrode assembly or rolled electrode assembly), and this electrode assembly and a nonaqueous electrolyte containing an electrolyte salt such as an electrolytic solution are sealed in the battery container to produce a nonaqueous electrolyte battery. During this process, the laminated body for a negative electrode and the nonaqueous electrolyte contact each other such that the lithium layer and the aluminum foil of the laminated sheet for alloy formation relating to the laminated body for a negative electrode react with each other to produce a lithium-aluminum alloy layer in the aluminum foil to form a negative electrode (i.e., anode active material layer).

The nonaqueous electrolyte battery is not limited to any particular shape, and may be in various shapes such as flat (including coin-shaped and button-shaped), laminated-cell, or tubular (i.e., the shape of a cylinder or rectangular parallelopiped (i.e., rectangular tube)). The battery container (i.e., exterior body) may be a combination of a metallic can with an opening (i.e., exterior can) and a cap (i.e., seal can), or may be a metallic laminated film.

Specifically, an exterior can may be crimped onto a seal can with a gasket present in between to seal up the opening, or an exterior can and a seal can may be welded together to seal up the opinion to fabricate a flat or tubular battery; or, two metallic laminated films may be laid on each other or a single metallic laminated film may be bent, and the peripheries are bonded together to seal up the opening to fabricate a laminated-cell battery.

In implementations using a battery container with crimp sealing, the gasket present between the exterior can and seal can may be made of PP or nylon, for example, or, in implementations that require a particularly high heat resistance due to the application of the battery, may be made of a heat-resistant resin with a melting point or pyrolysis temperature of 200 °C or higher, such as a fluorine resin such as PFA, polyphenylene ether (PEE), polysulfone (PSF), polyarylate (PAR), polyethersulfone (PES), PPS, or PEEK. If the battery is to be used in an application that requires heat resistance, a glass hermetic seal may also be used to seal up the opening.

EXAMPLES

Now, the present invention will be described in detail based on examples. The examples described below are not intended to limit the scope of the present invention.

(Inventive Example 1)

<Fabrication of Positive Electrode>

Manganese dioxide, which is to constitute a cathode active material, carbon black, to constitute a conductive aid, and PTFE, to constitute a binder, were mixed in a mass ratio of 90:5:5 to prepare a cathode mixture, which was formed into a positive electrode with a diameter of 16 mm and a thickness of 1.8 mm (i.e., cathode mixture molding).

(Fabrication of Laminated Body for Negative Electrode>

Acetylene black in 100 parts by mass and polyvinyl pyrrolidone in 2 parts by mass were mixed in N-methyl-2-pyrrolidone to prepare a liquid dispersion of acetylene black. This liquid dispersion was applied to a surface of a long aluminum foil with a thickness of 9 $\mu$m by a coating machine and dried to fabricate a laminated sheet for alloy formation with a carbon layer on one side of the aluminum foil. The weight per unit area of the carbon layer was 1.0 mg/cm$^2$.

Next, this sheet was laminated onto one side of a lithium foil with a thickness of 1.2 mm, where the exposed surface of the aluminum foil was on the lithium foil, and a circular shape with a diameter of 16 mm was punched out to produce a laminated body for a negative electrode composed of a lithium layer, an aluminum layer and a carbon layer.

<Preparation of Nonaqueous Electrolytic Solution>

Propylene carbonate and 1,2-dimethoxyethane were mixed in a volume ratio of 1:1 to produce a solvent mixture, and $LiClO_4$ was dissolved therein at a concentration of 0.5 mol/l and 1,3-propane sultone was further added in 2 mass % to prepare a nonaqueous electrolytic solution.

<Fabrication of Battery>

The above-described cathode, laminated body for a negative electrode and nonaqueous electrolytic solution were used and a nonwoven fabric made of polymethylpentene (with a thickness of 320 $\mu$m) was used for a separator to assemble a coin-shaped nonaqueous-electrolytic-solution primary battery with the structure shown in FIG. 1 and with a diameter of 20 mm and a height of 3.2 mm.

Inside the battery container, the laminated body for a negative electrode and nonaqueous electrolytic solution were allowed to contact to produce an anode active material layer with a lithium-aluminum alloy layer formed on a surface of the lithium layer, thus producing a negative electrode that further included a carbon layer on the lithium-aluminum alloy layer of the anode active material layer.

(Inventive Example 2)

A coin-shaped nonaqueous-electrolytic-solution primary battery was assembled in the same manner as for Inventive Example 1 except that the weight per unit area of the carbon layer constituting part of the laminated sheet for alloy formation was 0.02 mg/cm$^2$.

(Inventive Example 3)

A coin-shaped nonaqueous-electrolytic-solution primary battery was assembled in the same manner as for Inventive Example 1 except that the weight per unit area of the carbon layer constituting part of the laminated sheet for alloy formation was 0.2 mg/cm$^2$.

(Inventive Example 4)

A coin-shaped nonaqueous-electrolytic-solution primary battery was assembled in the same manner as for Inventive Example 1 except that the weight per unit area of the carbon layer constituting part of the laminated sheet for alloy formation was 2.0 mg/cm$^2$.

(Comparative Example 1)

An aluminum foil with a thickness of 9 $\mu$m was pressure bonded to one side of a lithium foil with a thickness of 1.2 mm, and a circular shape with a diameter of 16 mm was punched out to produce a laminated body of a lithium layer and an aluminum layer. Next, the same liquid dispersion of acetylene black as for Inventive Example 1 was prepared and applied to the aluminum layer of that laminated body and dried to fabricate a laminated body for a negative electrode with a carbon layer formed over the entire surface of the aluminum layer of the laminated body. The weight per unit area of the carbon layer was 1.0 mg/cm$^2$.

Then, a coin-shaped nonaqueous-electrolytic-solution primary battery was assembled in the same manner as for Inventive Example 1 except that the above-described laminated body for a negative electrode was used.

(Comparative Example 2)

A coin-shaped nonaqueous-electrolytic-solution primary battery was assembled in the same manner as for Comparative Example 1 except that no liquid dispersion of acetylene black was applied to the surface of the laminated body of lithium and aluminum layers and this laminated body was used for assembly of the battery with no further treatment.

Each of the batteries of Inventive Examples 1 to 4 and Comparative Examples 1 and 2 was discharged at a quantity of electricity corresponding to 120 mAh at room temperature, and was then held in a constant-temperature bath at -40 °C. After the temperature of the battery decreased, the battery was discharged at a current value of 10 mA, and the discharge voltage of the battery 10 ms after initiation of discharge (CCV) was measured to evaluate the load characteristics at low temperature. The results are shown in Table 1.

[Table 1]

|  | Weight per unit area of carbon layer (mg/cm$^2$) | Discharge voltage at -40 °C (V) |
|---|---|---|
| Inv. Ex. 1 | 1.0 | 2.791 |
| Inv. Ex. 2 | 0.02 | 2.523 |
| Inv. Ex. 3 | 0.2 | 2.629 |
| Inv. Ex. 4 | 2.0 | 2.837 |
| Comp. Ex. 1 | 1.0 | 2.711 |
| Comp. Ex. 2 | - | 2.448 |

Each of the coin-shaped nonaqueous-electrolytic-solution primary batteries of Inventive Examples 1 to 4, in which the lithium-aluminum alloy layer of the negative electrode was formed using an aluminum foil with a carbon layer formed in advance on its surface, fabrication of the negative electrode during the fabrication step was easier than with the battery of Comparative Example 1 which had a liquid dispersion of acetylene black applied to a small-area aluminum foil, and, as shown in Table 1, had improved load characteristics at low temperature over the battery of Comparative Example 2 which had no carbon layer on the negative electrode.

Further, the use of an aluminum foil with a carbon layer formed in advance on its surface provided higher uniformity of the carbon layer and smaller variations in characteristics than where an aluminum foil was cut into pieces of small areas to conforming with the intended negative electrodes and a carbon layer was formed on each individual aluminum foil; thus, a composition between the coin-shaped nonaqueous-electrolytic-solution primary batteries of Inventive Example 1 and Comparative Example 1, both of which used a negative electrode with a carbon layer of the same weight per unit area, shows that the battery of Inventive Example 1 had better load characteristics at low temperature. Specifically, whereas the CCV values of 10 batteries fabricated in accordance with Comparative Example 1 had variations of about 0.07 V at the maximum relative to the median, batteries in accordance with Inventive Example 1 had variations in CCV value not larger than 0.02 V.

(Inventive Example 5)

<Fabrication of Positive Electrode>

A cathode mixture was prepared with the following procedure: Ketjenblack with a BET specific surface area of 800 m$^2$/g ("EC300J" (product name) from Lion Specialty Chemicals Co., Ltd.) in 2 parts by mass, which was to constitute a conductive aid, and manganese dioxide with an average particle size of 35 $\mu$m, in 94.5 parts by mass, to constitute a cathode active material, were dry mixed using a planetary mixer for 5 minutes; then, water in an amount corresponding to 20 % (in mass ratio) of the entire solid was added; and further mixing was done for 5 minutes. Next, PTFE dispersion ("D-1" from Daikin Industries, Ltd.) was added in such a proportion that PTFE was in 3.5 parts by mass; lastly, water was added until the ratio of the entire solid became 74 mass % before further mixing for 5 minutes to provide a cathode mixture.

Next, a roller with a diameter of 250 mm, adjusted to provide a temperature of 125±5 °C, was used to roll the above-described cathode mixture into a sheet, which was dried in an environment at a temperature of 105±5 °C until the residual water was in 2 mass % or less to form a preliminary sheet. Furthermore, the preliminary sheet was pulverized by a pulverizer into powder with a particle size of about 0.5 mm or smaller and, once again, rolled by the above-described roller into a cathode mixture sheet with a thickness of 0.79 mm and a density of 2.89 g/cm$^3$. The content of manganese dioxide per unit area in this cathode mixture sheet was 0.216 g/cm$^2$.

The cathode mixture sheet thus obtained was cut to produce a cathode mixture sheet 1 with a width of 42.5 mm and a length of 67 mm (i.e., cathode mixture sheet to be positioned inside upon roll-up) and a cathode mixture sheet 2 with a width of 42.5 mm and a length of 76 mm (i.e., cathode mixture sheet to be positioned inside upon roll-up).

An expand metal of stainless steel (SUS316) was used for a cathode current collector. This expand metal was cut into a width of 39 mm and a length of 60 mm, and a ribbon of stainless steel with a thickness of 0.1 mm and a width of 3 mm was attached to its middle as determined along the longitudinal direction by means of resistance welding to serve as a cathode lead. Further, carbon paste (from Nippon Graphite Industries, Co., Ltd.) was applied to this expand metal to such a degree that the meshes were not filled up, and then dried at a temperature of 105±5 °C to produce a cathode current collector. The amount of carbon paste applied was such that the amount of applied paste after drying was 5 mg/cm$^2$.

Next, with the cathode current collector located between cathode mixture sheets 1 and 2, only one end of the stack as determined along the longitudinal direction was fixed and the cathode mixture sheets and cathode current collector were integrated. Specifically, cathode mixture sheets 1 and 2 and the cathode current collector were positioned such that the mixture sheets were aligned at one end of the stack as determined along the longitudinal direction and the associated end of the current collector did not stick from between the associated ends of the two cathode mixture sheets; and, with this state kept, the two cathode mixture sheets were pressed at a location 5 mm away from the above-mentioned ends for pressure bonding to integrate the cathode mixture sheets and cathode current collector. Thereafter, hot-air drying was performed at $300 \pm 10\,°C$ for 15 minutes to produce a sheet-shaped positive electrode with a thickness of 1.6 mm and a width of 42.5 mm.

<Fabrication of Laminated Body for Negative Electrode>

A laminated sheet for alloy formation with a carbon layer (with a weight per unit area of 1.0 mg/cm$^2$) on a surface of an aluminum foil was fabricated in the same manner as for Inventive Example 1 except that the thickness of the aluminum foil was 6 $\mu$m, from which a strip of sheet 1 with a width of 40 mm and a length of 96 mm and a strip of sheet 2 with a width of 40 mm and a length of 57 mm were cut out. Next, a lithium foil 1 with a width of 42 mm, a length of 96 mm and a thickness of 0.29 mm and a lithium foil 2 with a width of 42 mm, a length of 57 mm and a thickness of 0.29 mm were placed on a copper foil (i.e., anode current collector) with a width of 43 mm, a length of 173 mm and a thickness of 15 $\mu$m, spaced apart from each other by a distance of 9 mm in the longitudinal direction. Further, sheet strip 1 was laid and placed on lithium foil 1 and sheet strip 2 on lithium foil 2 in such a manner that each aluminum foil was in contact with the associated lithium foil to construct a sheet-shaped laminated body for a negative electrode including a current collector. The ratio of the area of the aluminum foil to the area of the lithium foil was 95 %, and the lithium and aluminum foils were laid on each other so as to be aligned at both ends of the stack as determined along the longitudinal direction and at that end as determined along the width direction that was to be adjacent to the bottom of the battery when inserted into the exterior can. Further, an anode lead made of nickel with a width of 3 mm, a length of 20 mm and a thickness of 0.1 mm was pressure bonded in advance to the lithium foil.

<Fabrication of Electrode Assembly>

Two PE microporous films, each with a width of 49 mm, a length of 180 mm and a thickness of 16 $\mu$m (with a porosity of 46 %, an air resistance of 200 s/100 mL, and a puncture strength of 380 g), were laid on each other and were used as a separator.

The two PE microporous films laid on each other were bonded onto the copper foil between the two lithium foils of the sheet-shaped laminated body for a negative electrode; further, the portions with the separator bonded thereto were sandwiched by the two halves of a roll core (with a diameter of 2.8 mm); the laminated body for a negative electrode, together with the separator, was rolled up by about one round; thereafter, the positive electrode was further placed thereon such that the fixed ends of the cathode mixture sheets were adjacent to the roll core, and rolled to provide a spiral electrode assembly.

<Assembly of Battery>

A bottomed cylindrical exterior can of nickel-plated stainless steel was prepared, and an insulating sheet of PP with a thickness of 0.2 mm was inserted therein to the bottom of the exterior can; the electrode assembly was inserted therein in such a posture that the cathode lead faced upward; and an electrolytic solution was injected and the opening was sealed up to assembly a cylindrical nonaqueous-electrolytic-solution primary battery with an outer diameter of 17.0 mm and a total height of 50 mm. The electrolytic solution was a nonaqueous solution with $LiCF_3SO_3$ dissolved at a concentration of 0.7 mol/L in a solvent mixture of ethylene carbonate, propylene carbonate and dimethoxyethane (in a volume ratio of 1:1:3). Further, during the above-described assembly step, an anode active material layer was produced which had a lithium-aluminum alloy layer formed on a surface of the lithium layer (i.e., lithium foil), thus forming a negative electrode that further included the carbon layer on the lithium-aluminum alloy layer of the anode active material layer.

<Preliminary Discharge and Aging>

The battery thus assembled was preliminarily discharged at a resistance of 1 $\Omega$ for 30 seconds and stored at 70 °C for six hours, and then a secondary preliminary discharge was performed at a fixed resistance of 1 $\Omega$ for one minute. The battery after preliminary discharge was aged at room temperature for seven days, and then the load characteristics at low temperature were evaluated under the conditions described further below.

(Comparative Example 3)

A cylindrical nonaqueous-electrolytic-solution primary battery was fabricated in the same manner as for Inventive Example 5 except that, in lieu of the laminated sheet for alloy formation, only an aluminum foil with a thickness of 6 μm was laminated onto a lithium foil to form a sheet-shaped negative electrode.

Each of the cylindrical nonaqueous-electrolytic-solution primary batteries of Inventive Example 5 and Comparative Example 3 were discharged at room temperature at a current value of 40 mA for 60 hours until the remaining capacity of the battery became about 30 % of the design capacity. Next, the battery was held in a constant-temperature bath at -30 °C and, after a decrease in the temperature of the battery, discharged at 100 mA and the discharge voltage of the battery 10 ms after initiation of discharge (CCV) was measured to evaluate the load characteristics at room temperature. The results are shown in Table 2.

[Table 2]

|  | Weight per unit area of carbon layer (mg/cm$^2$) | Discharge voltage at -30 °C (V) |
|---|---|---|
| Inv. Ex. 5 | 1.0 | 3.012 |
| Comp. Ex. 3 | - | 2.733 |

As was the case with coin-shaped nonaqueous-electrolytic-solution primary batteries discussed above, improvements in load characteristics at low temperature were achieved with cylindrical nonaqueous-electrolytic-solution primary batteries.

The present invention may be carried out in other modes other than discussed above without departing from the spirit of the invention. The embodiments disclosed in the present application are exemplary only, and the present invention is not limited to these embodiments. The scope of the present invention should be interpreted with preference to the attached claims, rather than the description provided above, and all the modifications within a scope equivalent to the scope of the claims are included in the scope of the claims.

INDUSTRIAL APPLICABILITY

A nonaqueous electrolyte battery produced by the method of the present invention may be used in various applications in which conventionally known nonaqueous-electrolytic-solution primary batteries and nonaqueous-electrolytic-solution secondary batteries are employed.

REFERENCE SIGNS LIST

1: nonaqueous electrolyte battery
2: positive electrode
3: negative electrode
31: lithium layer
32: lithium-aluminum alloy layer
33: carbon layer
4: separation layer
5: exterior can
6: seal can
7: gasket

**Claims**

1. A laminated sheet for alloy formation, the laminated sheet being an independent sheet including an aluminum foil and a carbon layer formed on one side of the aluminum foil,
the laminated sheet for alloy formation used to form a lithium-aluminum alloy layer on a surface of a lithium layer by allowing a side of the aluminum foil opposite to the side with the carbon layer to contact the lithium layer.

2. The laminated sheet for alloy formation according to claim 1, wherein the carbon layer contains at least one carbon material selected from the group consisting of graphite, carbon black and carbon fiber.

3. The laminated sheet for alloy formation according to claim 1, wherein the carbon layer has a weight per unit area of 0.15 to 3 mg/cm$^2$.

4. The laminated sheet for alloy formation according to claim 1, wherein the aluminum foil has a thickness of 1 to 20 $\mu$m.

5. A method of manufacturing a negative electrode for a nonaqueous electrolyte battery including an anode active material layer having a lithium layer and a lithium-aluminum alloy layer formed on a surface of the lithium layer, and a carbon layer formed on a surface of the anode active material layer, comprising:

   laminating the laminated sheet for alloy formation according to any one of claims 1 to 4 onto the lithium layer in such a manner that the side of the aluminum foil in the laminated sheet for alloy formation opposite to the side with the carbon layer is in contact with the lithium layer; and
   allowing lithium in the lithium layer and aluminum in the aluminum foil to react with each other to form the anode active material layer.

6. A method of manufacturing a nonaqueous electrolyte battery including a positive electrode, a negative electrode and a separation layer between the positive electrode and the negative electrode,

   the negative electrode including an anode active material layer having a lithium layer and a lithium-aluminum alloy layer formed on a surface of the lithium layer, and a carbon layer formed on a surface of the anode active material layer,
   wherein the negative electrode is formed by the method of manufacturing a negative electrode for a nonaqueous electrolyte battery according to claim 5.

## INTERNATIONAL SEARCH REPORT

| International application No. |
| --- |
| **PCT/JP2023/035087** |

| | |
| --- | --- |
| **A.** | **CLASSIFICATION OF SUBJECT MATTER** |

*H01M 4/12*(2006.01)i; *H01M 4/06*(2006.01)i; *H01M 4/134*(2010.01)i; *H01M 4/1395*(2010.01)i; *H01M 4/40*(2006.01)i; *H01M 4/62*(2006.01)i
FI:  H01M4/12 F; H01M4/134; H01M4/40; H01M4/62 Z; H01M4/06 X; H01M4/1395

According to International Patent Classification (IPC) or to both national classification and IPC

| | |
| --- | --- |
| **B.** | **FIELDS SEARCHED** |

Minimum documentation searched (classification system followed by classification symbols)

H01M4/12; H01M4/06; H01M4/134; H01M4/1395; H01M4/40; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 04-162372 A (HONDA MOTOR CO., LTD.) 05 June 1992 (1992-06-05) | 1, 5-6 |
| | claims, examples | |
| Y | | 2 |
| A | | 3–4 |
| Y | JP 03-216960 A (HONDA MOTOR CO., LTD.) 24 September 1991 (1991-09-24) | 2 |
| | claims, p. 2 | |
| Y | WO 2017/002981 A1 (HITACHI MAXELL LTD.) 05 January 2017 (2017-01-05) | 1, 4-6 |
| | paragraphs [0067], [0070], [0072], examples, claims | |
| A | | 2-3 |
| Y | WO 2022/030611 A1 (MAXELL LTD.) 10 February 2022 (2022-02-10) | 1, 4-6 |
| | paragraphs [0072]-[0078], examples, claims | |
| A | | 2-3 |
| A | JP 2022-091631 A (MAXELL LTD.) 21 June 2022 (2022-06-21) | 1–6 |
| | entire text | |

✓ Further documents are listed in the continuation of Box C.     ✓ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 December 2023** | **19 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

<table>
<tr><td colspan="2">International application No.</td></tr>
<tr><td colspan="2">**PCT/JP2023/035087**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | WO 2017/138361 A1 (HITACHI MAXELL LTD.) 17 August 2017 (2017-08-17) entire text | 1-6 |

## INTERNATIONAL SEARCH REPORT
### Information on patent family members

International application No.

**PCT/JP2023/035087**

| Patent document cited in search report | | | Publication date (day/month/year) | Patent family member(s) | Publication date (day/month/year) |
|---|---|---|---|---|---|
| JP | 04-162372 | A | 05 June 1992 | (Family: none) | |
| JP | 03-216960 | A | 24 September 1991 | (Family: none) | |
| WO | 2017/002981 | A1 | 05 January 2017 | US 2018/0191022 A1 paragraphs [0075], [0078], [0080], examples, claims<br>US 2018/0309139 A1<br>WO 2017/169684 A1<br>EP 3319161 A1<br>EP 3355398 A1<br>CN 107710490 A | |
| WO | 2022/030611 | A1 | 10 February 2022 | EP 4177980 A1 paragraphs [0072]-[0078], examples, claims | |
| JP | 2022-091631 | A | 21 June 2022 | (Family: none) | |
| WO | 2017/138361 | A1 | 17 August 2017 | US 2021/0194058 A1 entire text<br>CN 108604706 A<br>KR 10-2018-0108584 A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020250816 A1
- WO 2012108212 A1
- WO 2020070958 A1
- WO 2020070955 A1